# EUROPEAN PATENT SPECIFICATION

(11) **EP 3 374 662 B1**
(45) Date of publication and mention of the grant of the patent: **24.06.2020**
(21) Application number: 16766230.3
(22) Date of filing: 07.09.2016
(51) Int. Cl.: F16G 5/16, B23P 15/00, C22C 38/00

(54) **METAL RING COMPONENT OF A DRIVE BELT FOR A CONTINUOUSLY VARIABLE TRANSMISSION**
METALLRINGKOMPONENTE EINES ANTRIEBSRIEMENS FÜR EIN STUFENLOSES GETRIEBE
ÉLÉMENT ANNULAIRE MÉTALLIQUE D'UNE COURROIE D'ENTRAÎNEMENT POUR UNE TRANSMISSION VARIABLE EN CONTINU

(30) Priority: 08.09.2015 NL 1041468
(43) Date of publication of application: 19.09.2018
(73) Proprietor: Robert Bosch GmbH, 70442 Stuttgart (DE)
(72) Inventor: PENNINGS, Bert, 5052 CH Goirle (NL); ELKHUIZEN, Jan-Peter, 5221 PH's Hertogenbosch (NL)
(74) Representative: Plevier, Gabriël Anton Johan Maria
(86) International application number: PCT/EP2016/025096
(87) International publication number: WO 2017/041899

(56) References cited:
- EP-A1- 1 176 224
- WO-A1-2005/111253
- WO-A1-2013/002633
- JP-A- 2002 038 251
- US-A- 3 451 809
- US-B2- 6 663 730

## Description

The present disclosure relates to an endless and flexible metal band that is used as a metal ring component in a drive belt for power transmission between two adjustable pulleys of the well-known continuously variable transmission or CVT applied in motor vehicles. In the drive belt a number of such rings are incorporated in at least one, but typically two laminated, i.e. mutually radially nested sets thereof. The known drive belt further comprises a number of transverse elements that are slidably mounted on such ring set or sets and that are typically made from metal as well.

Maraging steel is used as the basic material for the rings, because this material provides a great resistance against bending and/or tensile stress fatigue, at least after the appropriate heat treatments thereof including precipitation hardening and nitriding. In fact, in the last decade or two, the industry has focussed the development efforts in relation to the drive belt ring component in maximising the fatigue resistance thereof. In particular, the composition of the maraging steel basic material has been optimised in that respect, while taking into account the mechanical processing and the heat treatment thereof that is part of the manufacturing process of the drive belt ring component. These efforts are illustrated by the several patent publications on this topic, amongst others by EP2281128-A1, JP2008/185183 (A) and US6663730-B2. Moreover, according to the Japanese patent application publication JP2002038251-A, the ring is provided with a superior fatigue strength by aging the maraging steel basic material to a hardness of 500-700Hv and then nitriding it so that a surface nitrogen concentration may be 0.5% or more and a nitrogen interstitial depth may be 20-50% of a distance from the surface to a centre of the ring.

As a result of these development efforts, the fatigue strength of the rings could be substantially improved, even to the extent that the number of rings included in the drive belt can in some case be reduced. For example in applications of the drive belt, i.e. CVTs, that previously required a set of 12 rings can now be served with only 10 rings made from newly developed basic materials without compromising the durability thereof.

According to the present disclosure, a new, previously unconsidered problem emerges with these improved drive belts with exceptional fatigue strength, namely that of accommodating shock-loads that may occur even during normal operation of the CVT. Such shock loads occur for example when a vehicle equipped with the CVT hits a curb or drives through a pothole at speed, whereby the drive belt is subjected to a sudden spike in the torque to be transmitted, resulting in an temporary additional tensioning thereof. It is considered that previously these shock loads did not cause a problem, because the number of rings needed for providing the drive belt required fatigue strength also provided the ring set(s) with a cross-sectional surface area that could accommodate the temporary additional tensile stress therein due to the said shock load without problem. However, by reducing the number of rings of the ring set, the said cross-sectional surface area is reduced as well and -according to an insight underlying the present disclosure- may become critical in view of the tensile stress caused by shock loads. It could thus occur that the tensile stress in a ring due to the said shock load may exceed the yield stress of that ring, at least in theoretically conceivable operating conditions of the CVT applications of the drive belt.

The present disclosure aims to find a solution for such problem of the shock loads becoming a critical factor in the CVT application of the drive belt. According to the present disclosure a solution is found in increasing the yield strength of the rings without compromising the fatigue strength thereof. In particular, the present disclosure concerns rings for drive belts for CVT manufactured from maraging steel basic materials comprising Iron, 17 to 19 mass-% Nickel, 4 to 8 mass-% Molybdenum and with 15 to 21 mass-% Cobalt and additionally satisfying the requirement that the sum of the Molybdenum and Cobalt content amounts to at least 22 mass-% and preferably amounts to between 24 and 28 mass-%. By imposing these additional composition requirements on the maraging steel basic material the ultimately manufactured rings are provided with increased yield strength that is, moreover, favourably balanced with the fatigue strength thereof, in particular in relation to the presently considered application thereof as basic material for the ring component of the drive belt for passenger car transmission application. If the combined Molybdenum and Cobalt content is less than 22 mass-%, the fatigue strength of the rings cannot be optimally exploited in the drive belt in view of the relatively low yield strength thereof, however, if the combined Molybdenum and Cobalt exceeds 28 mass-%, the hardness and brittleness of the ring after precipitation hardening (ageing) result in a reduced fatigue strength thereof.

According to the present invention, after precipitation hardening the core material of the ring has a hardness of at least 700 HV1.0, preferably of 750 HV1.0 or more and a yield strength of at least 2000 MPa, preferably of 2300 MPa or more. By this relatively high hardness and yield strength, the ring is capable of accommodating the temporary additional tensile stress due to the said shock loads, while providing a fatigue strength that is comparable to rings made from a conventional basic material.

In a further elaboration of the above teaching, in particular related to the relatively high hardness of the novel ring, the present disclosure also concerns the thickness of the nitrided surface layer of the ring. According to the present disclosure, the ring is provided with a nitrided surface layer of reduced thickness, in particular of 10 to 15% of the total radial thickness of the ring.

In particular, according to the present disclosure, by the heat treatment of nitriding a surface hardness of the ring is set between 900 and 1050 HV0.1. Thus, the presently considered novel ring is provided with a hardness differential between the core material and the outer surface of the ring of 300 HV or less, which relatively low value was found to favourably and significantly reduce the risk of a fatigue fracture initiation in the nitrided surface layer, i.e. was found to improve the fatigue strength of the ring.

In an alternative elaboration of the above teaching, in particular related to the relatively high yield strength of the novel ring, the present disclosure also concerns a ring that is not provided with a nitrided surface layer at all, i.e. that is not subjected to the heat treatment of nitriding, but that is subjected to a shot-peening process instead. By the shot-peening process a compressive (residual) stress and additional hardness is introduced in the surface layer of the ring as well, however, much faster and more accurately than is possible with the nitriding heat treatment.

It is noted that rings made from conventional materials (i.e. known maraging steel alloys) cannot be provided with the compressive stress value that is required for the current CVT applications of the drive belt by shot-peening alone, even though it is in principle known to treat drive belt rings in a shot-peening process, for example from JP1984/0164428 (A). This particular limitation of shot-peening is caused by the phenomenon that the compressive stress that can be introduced by shot-peening amounts to two-thirds of the yield stress of the material in question at most. Otherwise (micro) cracks arise in or near the surface that are, of course, extremely detrimental to the fatigue strength of the material. The yield strength of the presently considered maraging steel basic material, at least after the precipitation hardening thereof, is, however, high enough for two-thirds of that value exceeding the said required compressive stress.

Although the presently considered maraging steel alloy compositions may include amounts of other alloy elements, such as Titanium, Aluminium and/or Chromium etc. is not required within the present context. Thus, preferably, Iron is the only other, i.e. balancing element in the alloy composition apart from small amounts of inevitable contaminations such as Oxygen, Nitrogen, Phosphorous, Silicon, etc., e.g. less than 1 mass-% in total. Obviously, by excluding other alloying elements from the presently considered maraging steel alloys, the cost thereof is minimised as all of these alloying elements are more expensive than Iron.

The above insights in accordance with the present disclosure and the application thereof in the metal ring component of the drive belt are explained hereinafter with reference to the accompanying drawing figures, whereof:
figure 1 provides a schematically depicted example of the well-known continuously variable transmission provided with a drive belt,
figure 2 is a section of the drive belt shown in perspective,
figure 3 provides a diagrammatic representation of the presently relevant part of the known manufacturing method of the metal ring component of the drive belt,
figure 4 provides a diagrammatic representation the part of the said known manufacturing method that is presently arranged in a novel way, and whereof
figure 5 is a graph of the hardness H of the material of the drive belt metal ring component in relation to a location D from the outer surface thereof relative to an overall radial dimension or thickness Tr of the ring.

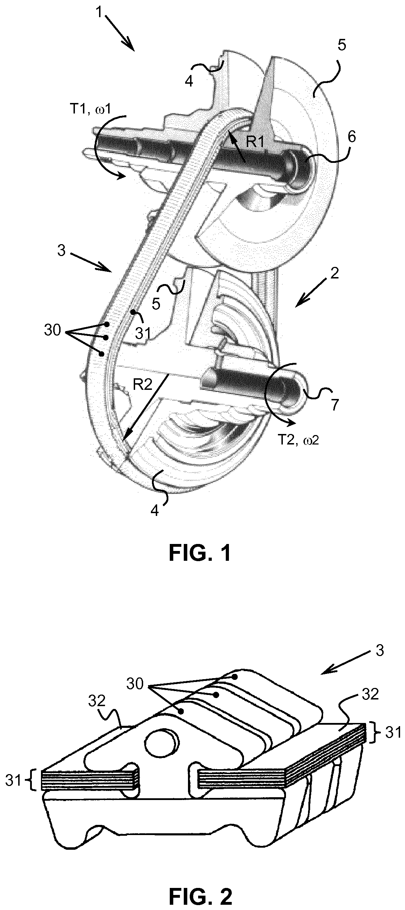

Figure 1 shows the central parts of a known continuously variable transmission or CVT that is commonly applied in the drive line of motor vehicles between the engine and the drive wheels thereof. The transmission comprises two pulleys 1, 2, each provided with two conical pulley discs 4, 5, where between a predominantly V-shaped groove is defined and whereof one disc 4 is axially moveable along a respective pulley shaft 6, 7 over which it is placed. A drive belt 3 is wrapped around the pulleys 1, 2 for transmitting a rotational movement ω and an accompanying torque T from the one pulley 1, 2 to the other 2, 1. The transmission generally also comprises activation means that impose on the said at least one disc 4 an axially oriented clamping force directed towards the respective other pulley disc 5 such that the belt 3 is clamped there between. Also, a (speed) ratio of the transmission between the rotational speed of the driven pulley 2 and the rotational speed of the driving pulley 1 is determined thereby.

An example of a known drive belt 3 is shown in detail in figure 2 in a section thereof, which belt 3 incorporates two ring sets 31 that are each composed of a set of -in this example- six thin, flat, i.e. ribbon-shaped, and flexible metal rings 32 made from maraging steel. The drive belt 3 further comprises a multitude of plate-like transverse elements 30 made from carbon steel, which transverse elements 30 are held together by the two ring sets 31 that are each located in a respective recess of the transverse elements 30. The transverse elements 30 take-up the said clamping force, such when an input torque T1 is exerted on the so-called driving pulley 1, friction between the discs 4, 5 and the belt 3, causes a rotation of the driving pulley 1 to be transferred to the so-called driven pulley 2 via the likewise rotating drive belt 3 at a transmission ratio determined by the respective radial positions R1, R2 thereof between the discs 4, 5 of the two transmission pulleys 1, 2.

During operation in the CVT the drive belt 3 and in particular the rings 32 thereof are subjected to a cyclically varying tensile and bending stresses, i.e. to a fatigue load. Typically, the ability of the rings 32 to deal with such fatigue load, i.e. the fatigue strength of the rings 32, thus determines the service life of the drive belt 3. Therefore, it has been a long standing general aim in the development of the drive belt manufacturing method, to realise a desired ring fatigue strength at a minimum of a combined (basic) material and processing cost.

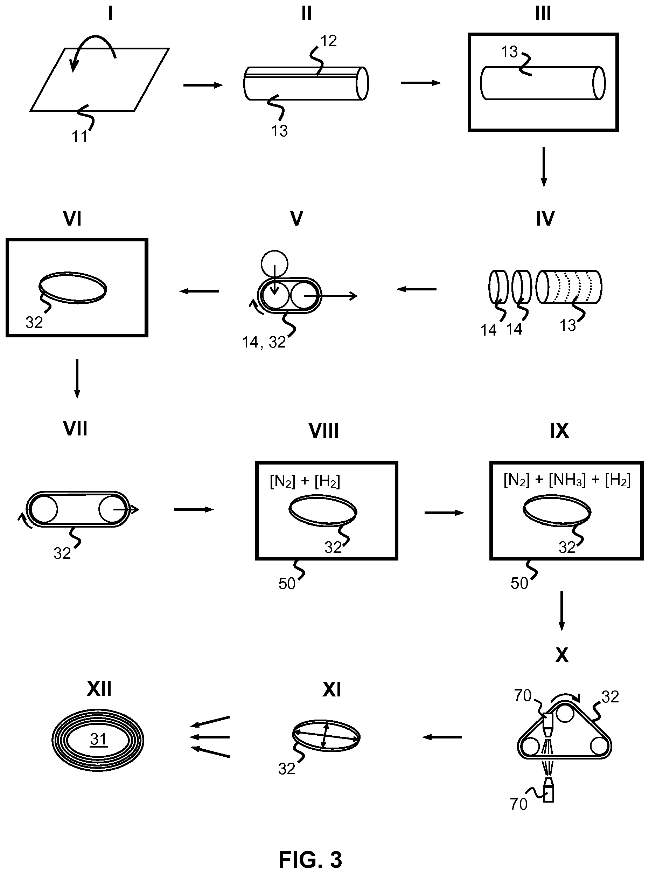

Figure 3 illustrates the presently relevant part of the known overall drive belt 3 manufacturing method, i.e. of the manufacturing of the ring 32 component thereof, as it is typically applied in the relevant industry. In figure 3, the separate process steps are indicated by way of Roman numerals.

In a first process step I a thin sheet or plate 11 of basic material that typically has a thickness in the range between 0.4 mm and 0.5 mm is bend into a cylindrical shape and the meeting plate ends 12 are welded together in a second process step II to form an open, hollow cylinder or tube 13. In a third step III of the process the tube 13 is annealed for removing the effect that the welding in step II has on the microstructure of the tube 13. Thereafter, in a fourth process step IV the tube 13 is cut into a number of annular hoops 14, which are subsequently -process step five V-rolled to reduce the thickness thereof to a value between 0.150 mm and 0.200 mm, typically to about 185 microns, while being elongated. After rolling the hoops 14 are usually referred to as rings 32. The rings 32 are then subjected to a further, i.e. ring annealing process step VI for removing the work hardening effect of the previous rolling process (i.e. step five V) by recovery and re-crystallisation of the ring material at a temperature considerably above 600 degree Celsius, e.g. about 800 degree Celsius. Thereafter, in a seventh process step VII, the rings 32 are calibrated, i.e. they are mounted around two rotating rollers and stretched to a predefined circumference length by forcing the said rollers apart. In this seventh process step VII, also an internal stress distribution is imposed on the rings 32.

Thereafter, the rings 32 are heat-treated in two process steps, namely an eighth process step VIII of precipitation hardening or ageing and a ninth process step IX of case hardening by gas-soft nitriding. More in particular, both such heat-treatments involve heating the rings 32 in an industrial oven or furnace containing a controlled gas atmosphere that typically is composed of nitrogen and some, e.g. about 5 volume-% of hydrogen for ageing or of nitrogen, hydrogen and ammonia for gas-soft nitriding. Both heat-treatments typically occur within the temperature range from 400 degrees Celsius to 500 degrees Celsius and can each last for about 45 minutes to more than 120 minutes in dependence on the basic material of the rings 32 (i.e. the alloy composition of the maraging steel), as well as on the mechanical properties that are desired for the rings 32. After such ageing and nitriding heat treatments, in a tenth process step X, the rings 32 are subjected to shot-peening for increasing the compressive stress near the radial inside surface and the radial outer surface of the rings 32. In this tenth process step, so called "shot", e.g. in the form of small beads or spheres that are typically made from metal, is sprayed from nozzles 70 towards the respective surface parts of a ring 32, e.g. by being carried in an air or water flow.

Finally, a number of the thus processed rings 32 are radially stacked, i.e. are nested, to form the ring set 31, as is further indicated in figure 3 in the last depicted, i.e. twelfth process step XII. Obviously, the rings 32 of the ring set 31 have to be suitably dimensioned there for, e.g. have to differ slightly in circumference length to allow the rings 32 to be fitted one around the other. To this end the subsequent rings 32 of the ring set 31 are typically purposively selected in a prior, i.e. in a eleventh process step XI, from a stock of rings 32 of different, but known circumference length.

As a general remark it is noted that the overall drive belt 3 manufacturing method described hereinabove, serves merely as an example. Several minor and even major modifications thereof are known already. For example, it is known to perform the heat treatments of ageing and nitriding as a single process step, i.e. it is known to perform the above eighth and ninth process step VIII, IX simultaneously. This latter, combined ageing and nitriding heat treatment, also known as dual hardening, becomes feasible only when the time that is required to complete the ageing of the ring material (to the desired extend) is relatively short, in particular such that it is completed in approximately the same time that is required to complete the nitriding of the ring (surface) material (to the desired extend).

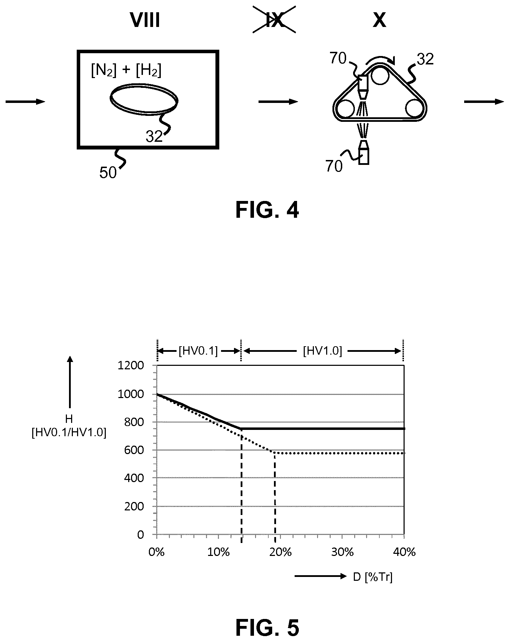

According to the present disclosure, the above known process chain of the manufacturing method can be improved upon without compromising the technical performance of the end product, i.e. of the ring 32 component for the drive belt 3 for CVT. In particular and as illustrated in figure 4, by applying a new maraging steel as the (plate 11 of) basic material in the manufacturing method for exhibiting an increased yield strength and/or stress after the precipitation hardening thereof in process step VIII, the nitriding of the rings 32 (i.e. process step IX) can be favourably omitted from the overall manufacturing method of the drive belt 3, because a sufficient compressive stress can already be introduced in the surface layer of the ring 32 by the process of shot-peening alone (i.e. process step X). The said new maraging steel includes 17 to 19 mass-% Nickel, 4 to 8 mass-% Molybdenum, 15 to 21 mass-% Cobalt and balance Iron and additionally satisfies the requirement that the sum of the Molybdenum and Cobalt content amounts to between 22 and 28 mass-%.

More in particular according to the present disclosure, during the precipitation hardening (i.e. process step VIII) thereof the ring 32 can be easily provided with a yield stress of about 2300 MPa, such that during the shot-peening (i.e. process step X) a compressive stress of about (minus) 1.5 GPa can be introduced in the surface layer of the ring 32. This compressive stress level is entirely sufficient and adequate for the presently considered application of the ring 32 in the drive belt 3 for passenger car transmissions.

In the idealised graph of figure 5, a hardness H of the material of the end product ring 32, as measured with the Vickers hardness test, is plotted in relation to a distance D from the outer surface of the ring 32, i.e. depth D, which depth D is in this example expressed as a percentage of the overall thickness Tr of the ring 32. In figure 5 the dotted line represents the hardness H of the ring 32 that is made from maraging steel with a conventionally applied composition and the solid line represents the hardness H of the ring 32 that is made from the said new maraging steel. In particular according to the present disclosure, during the precipitation hardening (i.e. process step VIII) thereof the ring 32 can be easily provided with a core hardness of 750 HV1.0, such that during the nitriding (i.e. process step IX) that is part of the said known process chain a surface hardness of 1000 HV0.1 can be realised quickly, because only a relative thin nitrided surface layer thickness is required thereto starting from the said hardness value of 750 HV1.0 after precipitation hardening. In the illustrative example of figure 5, such layer thickness amounts to slightly less than 14% of the overall thickness Tr of the ring 32, or approximately 70% of the layer thickness D that is required if the ring 32 are made from a conventional basic material.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. Flexible metal ring (32) destined for use as, or at least in a drive belt (3) for a continuously variable transmission with two pulleys and a drive belt (3), which ring (32) is made from steel including 17 to 19 %-by weight Nickel, 4 to 8 %-by weight Molybdenum and 15 to 21 %-by weight Cobalt, with the combined Molybdenum and Cobalt content amounting to at least 22 % and preferably having a value in the range from 24 to 28 %-by weight, **characterised in that**, the core material of the ring (32) both has a yield strength of at least 2000 MPa, preferably of more than 2300 MPa and has a hardness of more than 700 HV1.0, preferably of more than 750 HV1.0.

2. The flexible metal ring (32) according to claim 1, **characterised in that**, a surface layer of the ring (32) is provided with a residual compressive stress having an absolute value amounting to about two thirds of the yield strength of the core material of the ring (32).

3. The flexible metal ring (32) according to claim 2, **characterised in that**, the residual compressive stress in the surface layer of the ring (32) amounts to minus 1333 MPa or more and, preferably, is equal to minus 1.5 GPa.

4. The flexible metal ring (32) according to claim 2 or 3, **characterized in that**, the ring (32) is not provided with a nitrided surface layer.

5. The flexible metal ring (32) according to claim 1, **characterised in that**, the ring (32) is provided with a nitrided surface layer having a thickness in the range from 10 to 15% of a total thickness (Tr) of the ring (32) measured in radial direction.

6. The flexible metal ring (32) according to claim 5, **characterised in that**, the surface material of the ring (32) has a hardness in the range from 900 to 1050 HV0.1.

7. The flexible metal ring (32) according to claim 1, **characterised in that**, the steel of the ring (32) further includes iron and less than 1 %-by weight of other elements.

8. A method for manufacturing a flexible metal ring (32) from precipitation hardened maraging steel including 17 to 19 %-by weight Nickel, 4 to 8 %-by weight Molybdenum and 15 to 21 %-by weight Cobalt, with the combined Molybdenum and Cobalt content amounting to at least 22 % and preferably having a value in the range from 24 to 28 %-by weight, which ring (32) is destined for use as, or at least in a drive belt (3) for a continuously variable transmission with two pulleys and a drive belt (3), wherein the ring (32) is subjected to a process step of precipitation hardening and subsequently to a process step of shot-peening, but not to a process step of nitriding.

9. The method for manufacturing a flexible metal ring (32) according to claim 8, wherein, after the completion of the process step of precipitation hardening and prior to the commencement of the process step of shot-peening, the ring (32) has a yield strength of at least 2000 MPa, preferably of more than 2300 MPa.

## Patentansprüche

1. Flexibler Metallring (32), der zur Verwendung als oder mindestens in einem Antriebsriemen (3) für ein stufenloses Getriebe mit zwei Riemenscheiben und einem Antriebsriemen (3) vorgesehen ist, wobei der Ring (32) aus Stahl gefertigt ist, der 17 bis 19 Gew.% Nickel, 4 bis 8 Gew.% Molybdän und 15 bis 21 Gew.% Kobalt einschließt, wobei der kombinierte Gehalt an Molybdän und Kobalt mindestens 22 Gew.% entspricht und vorzugsweise einen Wert im Bereich von 24 bis 28 Gew.% aufweist, **dadurch gekennzeichnet, dass** das Kernmaterial des Rings (32) sowohl eine Streckgrenze von mindestens 2000 MPa, vorzugsweise mehr als 2300 MPa, als auch eine Härte von mehr als 700 HV 1,0, vorzugsweise mehr als 750 HV 1,0 aufweist.

2. Flexibler Metallring (32) nach Anspruch 1, **dadurch gekennzeichnet, dass** eine Oberflächenschicht des Rings (32) mit einer Druckeigenspannung mit einem Absolutwert bereitgestellt wird, der etwa zwei Dritteln der Streckgrenze des Kernmaterials des Rings (32) entspricht.

3. Flexibler Metallring (32) nach Anspruch 2, **dadurch gekennzeichnet, dass** die Druckeigenspannung in der Oberflächenschicht des Rings (32) minus 1333 MPa oder mehr entspricht und vorzugsweise gleich minus 1,5 GPa ist.

4. Flexibler Metallring (32) nach Anspruch 2 oder 3, **dadurch gekennzeichnet, dass** der Ring (32) nicht mit einer nitridierten Oberflächenschicht ausgestattet ist.

5. Flexibler Metallring (32) nach Anspruch 1, **dadurch gekennzeichnet, dass** der Ring (32) mit einer nitridierten Oberflächenschicht mit einer Dicke im Bereich von 10 bis 15 % einer Gesamtdicke (Tr) des Rings (32) ausgestattet ist, gemessen in Radialrichtung.

6. Flexibler Metallring (32) nach Anspruch 5, **dadurch gekennzeichnet, dass** das Oberflächenmaterial des Rings (32) eine Härte im Bereich von 900 bis 1050 HV 0,1 aufweist.

7. Flexibler Metallring (32) nach Anspruch 1, **dadurch gekennzeichnet, dass** der Stahl des Rings (32) des Weiteren Eisen und weniger als 1 Gew.% andere Elemente einschließt.

8. Verfahren zum Fertigen eines flexiblen Metallrings (32) aus ausscheidungsgehärtetem Maraging-Stahl, der 17 bis 19 Gew.% Nickel, 4 bis 8 Gew.% Molybdän und 15 bis 21 Gew.% Kobalt einschließt, wobei der kombinierte Gehalt an Molybdän und Kobalt mindestens 22 % entspricht und vorzugsweise einen Wert im Bereich von 24 bis 28 Gew.% aufweist, wobei der Ring (32) zur Verwendung als oder mindestens in einem Antriebsriemen (3) für ein stufenloses Getriebe mit zwei Riemenscheiben und einem Antriebsriemen (3) vorgesehen ist, wobei der Ring (32) einem Verfahrensschritt des Ausscheidungshärtens und nachfolgend einem Verfahrensschritt des Kugelstrahlens, jedoch nicht einem Verfahrensschritt des Nitridierens unterzogen wird.

9. Verfahren zum Fertigen eines flexiblen Metallrings (32) nach Anspruch 8, wobei der Ring (32) nach Abschluss des Verarbeitungsschritts des Ausfällungshärtens und vor Beginn des Verarbeitungsschritts des Kugelstrahlens eine Streckgrenze von mindestens 2000 MPa, vorzugsweise mehr als 2300 MPa aufweist.

## Revendications

1. Anneau métallique souple (32) destiné à être utilisé comme, ou au moins dans une courroie d'entraînement (3) pour une transmission à variation continue avec deux poulies et une courroie d'entraînement (3), lequel anneau (32) est en acier comprenant 17 à 19 % en poids de nickel, 4 à 8 % en poids de molybdène et 15 à 21 % en poids de cobalt, la teneur en molybdène et cobalt combinés représentant au moins 22 % et de préférence ayant une valeur dans la plage de 24 à 28 % en poids, **caractérisé en ce que** le matériau central de l'anneau (32) a à la fois une limite d'élasticité conventionnelle d'au moins 2 000 MPa, de préférence supérieure à 2 300 MPa et une durée supérieure à 700 HV 1,0, de préférence supérieure à 750 HV 1,0.

2. Anneau métallique souple (32) selon la revendication 1, **caractérisé en ce qu'**une couche de surface de l'anneau (32) est dotée d'une contrainte de compression résiduelle ayant une valeur absolue représentant environ les deux tiers de la limite d'élasticité conventionnelle du matériau central de l'anneau (32).

3. Anneau métallique souple (32) selon la revendication 2, **caractérisé en ce que** la contrainte de compression résiduelle dans la couche de surface de l'anneau (32) est supérieure ou égale à moins 1 333 MPa et, de préférence, est égale à moins 1,5 GPa.

4. Anneau métallique souple (32) selon la revendication 2 ou 3, **caractérisé en ce que** l'anneau (32) n'est pas doté d'une couche de surface nitrurée.

5. Anneau métallique souple (32) selon la revendication 1, **caractérisé en ce que** l'anneau (32) est doté d'une couche de surface nitrurée ayant une épaisseur dans la plage de 10 à 15 % d'une épaisseur totale (Tr) de l'anneau (32) mesurée dans le sens radial.

6. Anneau métallique souple (32) selon la revendication 5, **caractérisé en ce que** le matériau de surface de l'anneau (32) a une dureté dans la plage de 900 à 1 050 HV 0,1.

7. Anneau métallique souple (32) selon la revendication 1, **caractérisé en ce que** l'acier de l'anneau (32) comprend en outre du fer et moins de 1 % en poids d'autres éléments.

8. Procédé de fabrication d'un anneau métallique souple (32) à partir d'acier maraging durci par précipitation comprenant 17 à 19 % en poids de nickel, 4 à 8 % en poids de molybdène et 15 à 21 % en poids de cobalt, la teneur en molybdène et cobalt combinés représentant au moins 22 % et de préférence ayant une valeur dans la plage de 24 à 28 % en poids, lequel anneau (32) est destiné à être utilisé comme, ou au moins dans une courroie d'entraînement (3) pour une transmission à variation continue avec deux poulies et une courroie d'entraînement (3), dans lequel l'anneau (32) est soumis à une étape de processus de durcissement par précipitation et par la suite à une étape de processus de grenaillage d'écrouissage, mais pas à un processus de nitruration.

9. Procédé de fabrication d'un anneau métallique souple (32) selon la revendication 8, dans lequel, à la fin de l'étape de processus de durcissement par précipitation et avant le début de l'étape de processus de grenaillage d'écrouissage, l'anneau (32) a une limite d'élasticité conventionnelle d'au moins 2 000 MPa, de préférence supérieure à 2 300 MPa.
